# EUROPÄISCHE PATENTSCHRIFT

(11) **EP 1 818 556 B1**
(45) Veröffentlichungstag und Bekanntmachung des Hinweises auf die Patenterteilung: **03.09.2008**
(21) Anmeldenummer: 06101527.7
(22) Anmeldetag: 10.02.2006
(51) Int. Cl.: F16D 3/62

(54) **Verfahren zur Herstellung einer Schlingeneinheit**
Method of making a loop unit
Méthode de fabrication d'un unité d'enroulement

(43) Veröffentlichungstag der Anmeldung: 15.08.2007
(73) Patentinhaber: Wulf Gaertner Autoparts AG, 22143 Hamburg (DE)
(72) Erfinder: Pfeffer, Andreas, Rausdorf 22929 (DE)
(74) Vertreter: Paul, Dieter-Alfred

(56) Entgegenhaltungen:
- EP-A- 0 084 884
- EP-A- 0 386 996
- DE-B- 1 197 696
- GB-A- 1 416 029
- GB-A- 2 082 716
- US-A- 5 163 876
- US-A- 5 766 675

## Beschreibung

Die vorliegende Erfindung betrifft ein Verfahren zur Herstellung einer Schlingeneinheit, insbesondere zum Einsatz als Verbindungs- oder/und Kraftübertragungselement von voneinander getrennten Kupplungselementen, wobei ein im wesentlichen formstabiler Werkstoff derart zu Schlingen gewickelt wird, dass die durch das Wickeln gebildeten, neben-und übereinander positionierten Schlingen eine Schlingeneinheit in der Form eines Werkstoffbündels bilden. Ein derartiges Verfahren ist z.B. aus GB-A-2 082 716 bekannt. Ferner wird eine solche Schlingeneinheit sowie eine flexible Wellenkupplung mit mindestens einer solchen Schlingeneinheit beschrieben.

Flexible Wellenkupplungen der oben genannten Art dienen der drehelastischen, axial schub- und zugelastischen, axial knickelastischen sowie schwingungsisolierenden Übertragung von Drehmomenten und finden insbesondere im Kraftfahrzeugbau Verwendung.

Bekannte gattungsgemäße Kupplungen bestehen aus zwei getrennten Kupplungselementen, die einander in einer Radialebene von zwei miteinander zu verbindenden Wellen gegenüberstehen. Dabei weist jedes Kupplungselement im radial äußeren Umfangsbereich kreisförmig angeordnete Kupplungszapfen auf, wobei die Kupplungszapfen der beiden Kupplungselemente in ein und derselben Radialebene der Kupplung in Drehrichtung alternierend hintereinander liegen. Die Kupplungszapfen sind untereinander jeweils paarweise über eine Gummilasche verbunden, die auf nebeneinander liegenden Kupplungszapfen des ersten und zweiten Kupplungselements aufgesteckt sind. Nachteil dieser Ausführung einer flexiblen Wellenkupplung ist, dass die Gummilaschen bei einem Versatz oder einer Abknickung der beiden zu verbindenden Wellen relativ zueinander einer Walkbewegung und einer Biegeverformung unterliegen, welche zum raschen Ermüden des Laschenwerkstoffs bis hin zu einem Versagen des Bauteils führt.

Zur Verbesserung der Zugbelastbarkeit bzw. der Erhöhung der Sicherheit bei Belastung über die vorgesehene Belastungsgrenze der Kupplung hinaus sind in der EP 0 167 654 B 1 die Laschen mit einer in sich geschlossenen Gliederkette aus Stahl versehen, die vollständig in die Gummilasche einvulkanisiert ist. Bei starken Belastungen wird das Elastomermaterial von der Gliederkette aus Stahl derart stark verpresst, dass die elastischen Eigenschaften des Elastomermaterials nicht mehr zur Wirkung kommen, so dass sich ein kardanisch und axial steifes Lastverhalten einstellt.

Die DE 101 12 260 zeigt eine drehelastische Wellenkupplung mit schlingenförmig elastischen Kupplungselementen, die derart angeordnet sind, dass sie im Wesentlichen nur auf Zug belastet werden und daher eine längere Lebensdauer aufweisen. Die Verstärkungseinlagen jedes Kupplungselementes bestehen aus einem Textiband oder einem Faden oder aus einem Metalldraht und sind um jeweils zwei Kupplungszapfen gewickelt, und mittels eines Quersteges aus einem elastomeren Material zusätzlich stabilisiert und versteift. Die Herstellung der Gelenkkörper ist jedoch sehr aufwendig und kostenintensiv. Der Abstand der Gelenkzapfen der verschiedenen Kupplungselemente muss bereits vor der Herstellung der Verstärkungseinlagen feststehen und die hergestellten Verstärkungseinlagen sind dann in ihrem Einsatzgebiet auf Kupplungstypen mit diesem spezifischen Abstand der Kupplungszapfen beschränkt. Somit muss für verschiedene Kupplungsgrößen eine eigene dazu passende Verstärkungseinlage hergestellt werden.

Zur Lösung dieses Problems wird im Stand der Technik vorgeschlagen, die Verbindungs- und Kraftübertragungselemente als Schlingeneinheiten auszuführen. Insbesondere bei wechselnder Beanspruchung der Kupplung besteht dabei die Gefahr, dass die einzelnen Schlingen sich überkreuzen, wodurch in den sich überkreuzenden Bereichen eine hohe Belastung hervorgerufen wird, die bis zum Ermüden des Materials führen kann, so dass die Lebensdauer der Schlingeneinheiten stark verkürzt ist.

Es ist daher Aufgabe der vorliegenden Erfindung, eine Schlingeneinheit bzw. eine flexible Wellenkupplung sowie ein einfaches und kostengünstiges Verfahren zu deren Herstellung bereitzustellen und gleichzeitig die Lebensdauer der Schlingeneinheit bzw. der flexiblen Wellenkupplung zu erhöhen.

Diese Aufgabe wird erfindungs gemäß durch ein Verfahren gemäß dem Anspruch 1 realisiert.

Mit anderen Worten basiert die Erfindung auf dem Grundgedanken, die Schlingen während des Wickelns zumindest bereichsweise in Ihrer Position zu fixieren.

Durch die Fixierung wird erreicht, dass die Schlingen sich während des Betriebs beispielsweise einer flexiblen Wellenkupplung nicht zueinander verlagern und somit keine Kreuzungspunkte bilden, was nachteiliger Weise eine Reibung der Schlingen aneinander und so einen Materialabtrag bis zu einem Ermüden des Materials zur Folge hätte.

Das Wickeln des faden- oder faserförmigen Werkstoffes kann beispielsweise auf einer dafür konzipierten Wickelvorrichtung erfolgen. Die so gefertigten Schlingeneinheiten können anschließend beispielsweise auf an der Wellenkupplung angeordneten Kupplungszapfen montiert werden, so dass ein Nachrüsten von bereits existierenden Wellenkupplungen möglich ist. Es ist aber auch möglich, die Kupplungszapfen von Wellenkupplungen direkt zu umwickeln.

Die Fasern können dabei in Längsrichtung gestreckt ausgerichtet sein. Durch die parallele Ausrichtung der Fasern innerhalb des Werkstoffbündels weist die so gebildete Schlingeneinheit in Faserrichtung eine gegenüber Stählen noch erhöhte Festigkeit auf. Gleichzeitig wird bei geeigneter Auswahl der entsprechenden Fasern, insbesondere Kohle-, Glas- oder Aramidfasern, eine Verringerung des Elastizitätsmoduls erzielt, so dass bei Biegebeanspruchung der Schlingen eine geringere Biegespannung auftritt.

Die Schlingeneinheiten können entweder direkt an einen Kupplungszapfen von zu verbindenden Kupplungselementen hergestellt werden, indem der fadenförmige Werkstoff schlingenförmig um die auf den Kupplungselementen angeordneten Kupplungszapfen neben- und übereinander zu einem Werkstoffbündel gewickelt werden. Es ist aber auch möglich, die Schlingeneinheiten auf einer separaten Wickelvorrichtung vorzufertigen und anschließend einfach auf die Kupplungs zapfen der zu verbindenden Kupplungselemente zu montieren. Durch die zu- und aneinander fixierten Schlingen wird die Montage zusätzlich vereinfacht.

Um die Schlingen bereits während des Wickelns an- bzw. zueinander zu fixieren, kann der faserförmige Werkstoff vor dem Wickeln, durch ein die Fixierungsmittel geführt werden. Um eine nur teilweise Benetzung des faden- oder faserförmigen Werkstoffes zu erreichen, ist es beispielsweise möglich, den Werkstoff an einer Sprühvorrichtung vorbeizuführen. Die Sprühvorrichtung sprüht dann in vorab einstellbaren Zeitabschnitten das Fixierungsmittel auf den Werkstoff auf.

Das Fixierungsmittel kann ein selbstklebendes Mittel wie beispielsweise ein Heißkleber, ein Kontaktklebstoff oder ein anderer Klebstoff, beispielsweise auf Polypropylen-, Polyamid- oder Polyolefinbasis, je nach Einsatzgebiet ein.

Wenn eine Fixierung nur in bestimmten Bereichen in der Schlingeneinheit gewünscht wird, kann das Fixierungsmittel derart gewählt werden, dass es für die Entwicklung der Fixierwirkung erst von außen aktiviert werden muss. Eine solche Aktivierung kann zum Beispiel mittels Laserstrahlung erfolgen. Andere Formen der Fixierung, wie Klammern, Einwachsen oder ähnliches sind ebenfalls denkbar. Auch ein alternierender Verfahrensablauf, in dem sich das Wickeln der Schlingen und das Aktivieren der Entwicklung der Klebewirkung abwechseln, ist möglich.

Eine besonders große Lebensdauer kann erreicht werden, indem die Schlingeneinheiten in einem weiteren Herstellungsschritt vulkanisiert werden. Die einzelnen Schlingeneinheiten können bedarfsweise auch mit einer andersartig ausgebildeten Korrosionsbeschichtung versehen werden, beispielsweise mit einer galvanisch angebrachten Korrosionsschutzbeschichtung aus Zink, Chrom oder Nickel.

Der formstabile, faserförmige Werkstoff der Schlingeneinheit kann aus der Gruppe umfassend Stahl, Metall, PET, Aramid, Polyamid, Polypropylen, Polyesther, HTTE, ECTE, PHEM, liquid crystal, PES oder aus Mischformen auch zu unterschiedlichen Anteilen ausgewählt sein.

Formstabil im Sinne dieser Erfindung bedeutet, dass der Werkstoff eine nur geringe Dehnung bei großer Flexibilität aufweist.

Die erfindungsgemäße flexible Wellenkupplung weist mindestens zwei voneinander getrennte Kupplungselemente auf, die einander in einer gemeinsamen Radialebene von miteinander zu verbindenden Wellen gegenüberstehen, wobei die Kupplungselemente jeweils im radial äußeren Umfangsbereich kreisförmig angeordnete Kupplungszapfen aufweisen, welche in ihrer gemeinsamen Radialebene in Drehrichtung alternierend hintereinander liegen und untereinander über mindestens eine Schlingeneinheit miteinander verbunden sind. Hierbei ist es möglich, dass eine einzelne Schlingeinheit alle Kupplungszapfen der flexiblen Wellenkupplung umschlingt oder aber, dass mehrere einzelne Schlingeneinheiten jeweils mindestens zwei benachbarte Kupplungszapfen umschließen. Die erfindungsgemäße flexible Wellenkupplung lässt sich aufgrund der einfachen Herstellung der erfindungsgemäßen Schlingeneinheiten und der Fixierung der einzelnen Schlingen der Schlingeneinheit zu- bzw. aneinander einfach montieren. Sie ist von großer Dauerhaltbarkeit und gewährleistet, dass Relativverlagerungen der verbundenen Wellenenden bei der Übertragung von Drehmomenten nicht mehr auftreten können.

Eine vorteilhafte Ausführungsform der Erfindung sieht vor, dass die Schlingeneinheiten im Berührungsbereich der Kupplungszapfen Umlenkbuchsen aufweist, die von mindestens einer der die Schlingeneinheit bildenden formstabilen Schlingen formschlüssig umschlungen sind. Die Umlenkbuchsen sind vorzugsweise aus Stahl oder einer reibungsarmen Keramik hergestellt und erzielen eine sichere Abstützung und eine Sicherung vor einem ungewollten Abrutschen der Schlingeneinheit in den Umlenkbereichen auf Höhe der Kupplungszapfen.

Bei einer weiteren Ausgestaltung der Erfindung sind die Schlingeneinheiten im Wesentlichen tangential zu einem Teilkreis der Kupplungselemente ausgerichtet. Dabei ist eine einfache Verbindung der Schlingeneinheiten mit den Kupplungselementen möglich. Die Schlingeneinheiten können für unterschiedliche Drehrichtungen entweder auf gleichen oder auf unterschiedlichen Teilkreisen angeordnet sein. Sie können derart alternierend mit den beiden Kupplungselementen verbunden werden, dass eine erste Anzahl an Schlingeneinheiten zur Kraftübertragung in einer ersten Drehrichtung und eine zweite Anzahl an Schlingeneinheiten in einer zweiten Drehrichtung wirksam angeordnet sind. Dadurch ist die flexible Wellenkupplung in einfacher Weise in unterschiedlichen Drehrichtungen betreibbar.

Die benachbarten Schlingeneinheiten sollten mit möglichst wenigen Berührungspunkten zueinander angeordnet werden, so dass unnötige Berührungspunkte bzw. Berührungsflächen zwischen den einzelnen Schlingeneinheiten vermieden werden, welche nachteiligerweise eine Reibung mit einem damit verbundenen Materialabtrag an den Schlingeneinheiten zur Folge hätte, was gleichzeitig zu einer Überbeanspruchung der einzelnen Fäden führen könnte, wodurch sich die Lebensdauer des Bauteils wesentlich verringern würde.

Ein alternatives Ausführungsbeispiel der vorliegenden Erfindung sieht vor, die Anzahl der Wicklungen der Schlingeneinheiten an die Beanspruchung anzupassen. Da die flexible Wellenkupplung in den verschiedenen Drehrichtungen unterschiedlich stark aufgrund der wirkenden Kräfte beansprucht werden kann, bietet es sich an, die einzelnen Schlingeneinheiten bezüglich ihrer Wicklung unterschiedlich auszugestalten. Da beispielsweise beim Einsatz der flexiblen Kupplung in einem Antriebsstrang eines Kraftfahrzeuges der Vorwärtsgang in der Regel stärker beansprucht wird als der Rückwärtsgang, können die für die Übertragung im Vorwärtsgang verantwortlichen Schlingeneinheiten eine größere Anzahl an Wicklungen aufweisen, als die Schlingeneinheiten, die die Kräfte während des Betriebes im Rückwärtsgang aufnehmen. Vorzugsweise weisen in die Schlingeneinheiten für den Vorwärtsgang ungefähr 100 Wicklungen und die Schlingeneinheiten für den Rückwärtsgang ca. 25 bis 50 Wicklungen auf. Die Anzahl der Schlingen kann je nach Einsatzgebiet jedoch variieren.

Um ein ungewolltes Abrutschen der Schlingeneinheiten von den Kupplungszapfen zu verhindern, können die Kupplungszapfen nach außen überstehende Kragelemente aufweisen. Die Kragelemente können auch einstückig mit der Buchse ausgelegt sein. Die Buchse kann dabei beispielsweise aus einem Kunststoff oder aus einem Metall oder einem keramischen Werkstoff bestehen. Um eine weitestgehend verschleißfreie flexible Wellenkupplung zu schaffen, bietet es sich an, die Buchse aus einem reibungsarmen und verschleißbeständigen Werkstoff vorzugsweise aus einer Keramik auszubilden. Um die einzelnen Schlingeneinheiten möglichst beabstandet voneinander anordnen und betreiben zu können, ist es möglich, die Buchsen mit Distanzstücken im vermeintlichen Berührungsbereich zu versehen. Die Distanzstücke können dabei sowohl einteilig als auch mehrteilig mit der Buchse ausgeführt sein

Eine vorteilhafte Ausgestaltung der Erfindung sieht vor, die Schlingeneinheiten aus einem faserverstärktem Kunststoff herzustellen, wobei die Fasern in Längsrichtung gestreckt ausgerichtet sind.

Durch die parallele Ausrichtung der Fasern innerhalb der Schlingeneinheit weist das gebildete Werkstoffbündel in Faserrichtung eine gegenüber Stählen erhöhte Festigkeit auf. Ferner wird durch den Einsatz von faserverstärkten Kunststoffen eine Gewichtsreduzierung der flexiblen Wellenkupplung erreicht, die wiederum eine geringere Fliehkraftbelastung nach sich zieht, so dass die Wellenkupplung gegenüber bekannten Wellenkupplungen in höheren Drehzahlbereichen betreibbar ist.

Die erfindungsgemäße flexible Wellenkupplung gewährleistet somit eine höhere Verlagerungsfähigkeit bezüglich axialer oder winkeliger Beanspruchungen sowie eine höhere Belastbarkeit als eine entsprechende Wellenkupplung mit Stahllaschen.

Natürlich ist es auch möglich, die erfindungsgemäßen Schlingeneinheiten in anderen Bauteilen eingesetzt werden, die bevorzugt vulkanisiert als Verstärkungs-, Verbindungs-, Zug- oder Kraftübertragungselement zum Einsatz kommen.

Hinsichtlich weiterer vorteilhafter Ausgestaltungen und Weiterbildungen der Erfindung wird auf die Unteransprüche sowie die nachfolgende Beschreibung anhand der beiliegenden Zeichnung verwiesen. In der Zeichnung zeigt:
- Figur 1: eine perspektivische Darstellung einer erfindungsgemäßen Schlingeneinheit;
- Figur 2: eine perspektivische Teildarstellung eines Querschnitts durch eine Schlingeneinheit gemäß der Figur 2;
- Figur 3: eine erfindungsgemäße Wellenkupplung im Querschnitt;
- Figur 4: ein auf Buchsen vormontiertes Schlingeneinheitspaket zur Montage auf eine flexible Wellenkupplung gemäß der Figur 3;

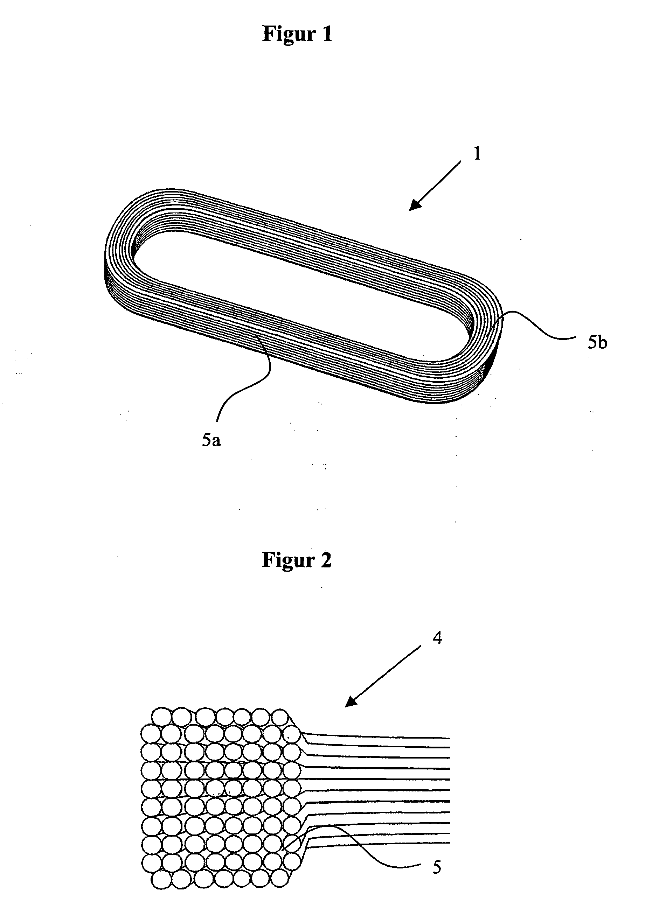

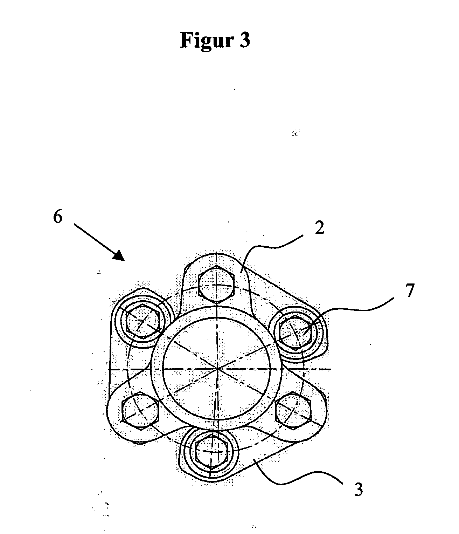

Die Figur 1 zeigt eine erfindungsgemäße Schlingeneinheit 1 zum Einsatz als Verbindungs- bzw. Kraftübertragungselement von voneinander getrennten Kupplungselementen 2, 3 (siehe auch Figur 3). Die Schlingeneinheit 1 besteht im Wesentlichen aus einem Werkstoffbündel 4, aus einem im Wesentlichen formstabilen, d.h. wenig dehnbaren, faserförmigen, zu Schlingen 5 gewickelten Werkstoff. Wie auch in der Figur 2 gut zu sehen ist, sind die Schlingen 5 durch ihre Wicklung neben- und übereinander angeordnet und dabei in ihrer durch die Wicklung festgelegten Position mittels eines Heißklebers aneinander fixiert. Die Schlingen 5 sind einstückig umlaufend gestaltet, und weisen jeweils zwei zueinander parallele Verbindungsstränge 5a und jeweils einen kreisbogenförmigen Umlenkbereich 5b im Bereich der einander gegenüberliegenden Stirnenden auf, so dass die beiden Verbindungsstränge 5a einschließlich der Umlenkbereiche 5b fließend ineinander übergehen. Die Schlingen 5 sind aus einem Aramidfaden hergestellt, welcher aus einer Vielzahl parallel zueinander ausgerichteter Aramidfasern besteht. Durch die Längsausrichtung der Aramidfasern erhält die Schlinge 5 eine sehr hohe Festigkeit. An Stelle von Aramidfasern können je nach Anwendungsbereich auch andere Fasern wie beispielsweise Stahl, Metall, PET, Polyamid, Polypropylen, Polyesther, HPTE, ECTE, PEHM, liquid crystal, PES oder auch Mischformen davon zu unterschiedlichen Anteilen eingesetzt werden.

Die Figur 3 zeigt eine flexible Wellenkupplung 6 mit zwei von einem getrennten Kupplungselementen 2, 3 die einander in einer gemeinsamen Radialebene von miteinander zu verbindenden nicht dargestellten Wellen gegenüberstehen, wobei die Kupplungselemente 2, 3 jeweils im radialen äußeren Umfangsbereich kreisförmig angeordnete Kupplungszapfen 7 aufweisen, welche in ihrer gemeinsamen Radialebene in Drehrichtung alternierend hintereinander liegen. Die flexible Wellenkupplung 6 ist zur Kraftübertragung von Wellen vorgesehen, die insbesondere axialen oder winkligen Versatz zueinander aufweisen. Sie kann beispielsweise zum Betrieb eines Antriebsstranges eines Kraftfahrzeuges zur Kraftübertragung vom Getriebe zur Hinterachse des Kraftfahrzeuges eingesetzt werden. Um eine Kraftübertragung zwischen den Kupplungszapfen 7 zu erreichen, ist es nun möglich, entweder die Kupplungszapfen 7 über eine einzelne Schlingeneinheit 1 miteinander zu verbinden oder aber mehrere einzelne Schlingeneinheiten 1 zwischen benachbarten Kupplungszapfen 7 anzuordnen.

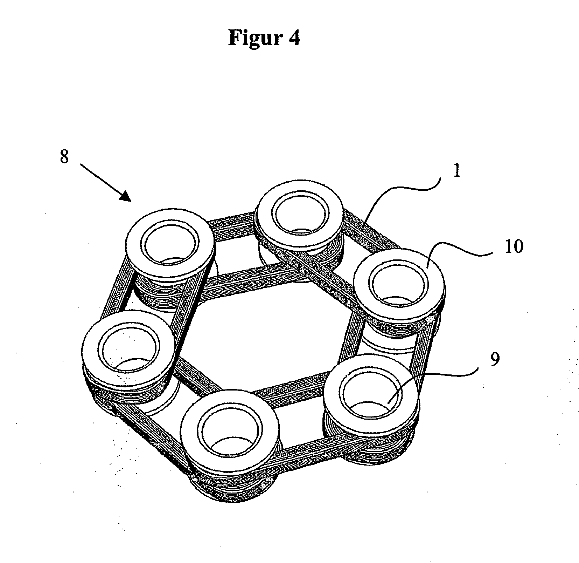

Die Figur 4 zeigt ein bereits vormontiertes Schlingeneinheitspaket 8, bei dem sechs einzelne Schlingeneinheiten 1 jeweils zwei benachbarte Buchsen 9 umschlingen. Jede Buchse 9 weist eine obere und eine untere Schlingeneinheit 1 auf, wobei die benachbarten Schlingeneinheiten 1 so angeordnet sind, dass sie möglichst wenige Berührungspunkte zueinander aufweisen. Die Buchsen 9 sind im dargestellten Ausführungsbeispiel aus Metall hergestellt und weisen an ihren stirnseitigen Enden jeweils ein Kragelement 10 auf, um zu verhindern, dass sich die Schlingeneinheiten 1 während eines Vulkanisierens oder während der Montage von den Buchsen 9 lösen.

Im montierten Zustand des Schlingeneinheitenpakets 8 gemäß der Figur 4 an der flexiblen Wellenkupplung 6 gemäß der Figur 3 sind alle Schlingeneinheiten 4 identisch ausgebildet und in zwei zueinander parallelen Radialebenen axial zwischen den beiden Kupplungsflanschen angeordnet. Jeweils drei Schlingeneinheiten 1 sind für eine Drehrichtung im Uhrzeigersinn und jeweils drei Schlingeneinheiten 1 für eine entgegengesetzte Drehrichtung gegen den Uhrzeigersinn angeordnet. Die Schlingeneinheiten 1 sind dabei im Wesentlichen tangential zu einem Teilkreis der Kupplungselemente 2, 3 ausgerichtet.

In diesem Ausführungsbeispiel weisen die Schlingeneinheiten 1 in den beiden Drehrichtungen eine gleiche Anzahl an Schlingen 5 auf. Es ist jedoch möglich, die Anzahl an Schlingen 5 an die Beanspruchung anzupassen, indem bei großer Beanspruchung eine große Anzahl von Schlingen 5 vorgesehen wird und bei geringerer Beanspruchung eine entsprechend reduzierte Anzahl.

### Bezugszeichenliste

- 1: Schlingeneinheit
- 2: Erstes Kupplungselement
- 3: Zweites Kupplungselement
- 4: Werkstoffbündel
- 5: Schlinge
- 5a: Verbindungsstrang
- 5b: Umlenkbereich
- 6: Flexible Wellenkupplung
- 7: Kupplungszapfen
- 8: Schlingeneinheitspaket
- 9: Buchse
- 10: Kragelement

## Patentansprüche

1. Verfahren zur Herstellung einer Schlingeneinheit (1), insbesondere zum Einsatz als Verbindungs- oder/und Kraftübertragungselement von voneinander getrennten Kupplungselementen (2, 3), wobei ein im wesentlichen formstabiler Werkstoff derart zu Schlingen (5) gewickelt wird, dass die durch das Wickeln gebildeten, neben- und übereinander positionierten Schlingen (5) eine Schlingeneinheit (1) in der Form eines Werkstoffbündels (4) bilden, **dadurch gekennzeichnet, dass** die Schlingen (5) während des Wickelns durch ein Fixierungsmittel zumindest bereichsweise in ihrer Position aneinander fixiert werden.

2. Verfahren zur Herstellung einer schlingeneinheit (1) nach Anspruch 1, **dadurch gekennzeichnet, dass** der Werkstoff um eine wickelvorrichtung gewickelt wird.

3. Verfahren zur Herstellung einer Schlingeneinheit (1) nach Anspruch 1, **dadurch gekennzeichnet, dass** der Werkstoff um mindestens zwei an den jeweiligen Kupplungselementen (2, 3) angeordnete Kupplungszapfen (7) gewickelt wird.

4. Verfahren zur Herstellung einer Schlingeneinheit (1) nach einem der Ansprüche 1 bis 3, **dadurch gekennzeichnet, dass** ein faserförmiger Werkstoff zur Fixierung der Schlingen (5) in ihrer durch die wicklung festgelegten Position vor dem Wickeln durch das Fixierungsmittel geführt wird.

5. Verfahren zur Herstellung einer Schlingeneinheit (1) nach einem der vorhergehenden Ansprüche, **dadurch gekennzeichnet, dass** das Fixierungsmittel ein selbstklebendes Mittel ist oder von außen aktiviert wird.

## Claims

1. A method for producing a loop unit (1), in particular for use as a co n-necting and/or force transmission element of clutch elements (2, 3) which are separated from one another, a substantially dimensionally stable material being wound to form loops (5) such that the loops (5) formed by the winding and positioned next to and over one another form a loop unit (1) in the form of a material cluster (4), **characterised in that** the loops (5) are fixed at least in regions in their position next to one another by a fixing means during the winding.

2. The method for producing a loop unit (1) according to Claim 1, **characterised in that** the material is wound around a winding apparatus.

3. The method for producing a loop unit (1) according to Claim 1, **characterised in that** the material is wound around at least two clutch pins (7) disposed on the respective clutch elements (2, 3).

4. The method for producing a loop unit (1) according to any of Claims 1 to 3, **characterised in that** a fibrous material is passed through the fixing means before winding in order to fix the loops (5) in their position determined by the winding.

5. The method for producing a loop unit (1) according to any preceding claim, **characterised in that** the fixing means is a self-adhesive means or is activated from the outside.

## Revendications

1. Procédé de fabrication d'une unité à boucles (1), notamment destinée à être utilisée comme élément de liaison et/ou de transmission de force d'éléments (2, 3) d'accouplement séparés l'un de l'autre, étant donné qu'un matériau sensiblement indéformable est enroulé en boucles (5) de telle sorte que les boucles (5) formées par l'enroulement et positionnées les unes à côté des autres et les unes au-dessus des autres forment une unité à boucles (1) sous la forme d'une botte de matériau (4), **caractérisé en ce que** les boucles (5) sont fixées au moins par zones dans leur position, les unes aux autres, par un moyen de fixation.

2. Procédé de fabrication d'une unité à boucles (1) selon revendication 1, **caractérisé en ce que** le matériau est enroulé autour d'un dispositif enrouleur.

3. Procédé de fabrication d'une unité à boucles (1) selon revendication 1, **caractérisé en ce que** le matériau est au moins enroulé autour de deux tenons d'accouplement (7), disposés respectivement au niveau des éléments d'accouplement (2, 3) correspondants.

4. Procédé de fabrication d'une unité à boucles (1) selon l'une des revendications 1 à 3, **caractérisé en ce que** un matériau en forme de fibre est conduit, avant l'enroulement, à travers le moyen de fixation, pour fixer les boucles (5), dans leurs positions déterminées par l'enroulement.

5. Procédé de fabrication d'une unité à boucles (1) selon l'une des revendications précédentes, **caractérisé en ce que** le moyen de fixation est un moyen autocollant ou bien un moyen activé de l'extérieur.
